# FASCICULE DE BREVET EUROPEEN

(11) **EP 3 394 464 B1**
(45) Date de publication et mention de la délivrance du brevet: **16.10.2019**
(21) Numéro de dépôt: 16819522.0
(22) Date de dépôt: 19.12.2016
(51) Int. Cl.: F16D 55/225, F16D 65/18

(54) **FREIN A DISQUE ELECTROMECANIQUE A ETRIER FIXE COMPRENANT UNE TRANSMISSION COMPENSANT UNE USURE ASYMETRIQUE DE SES PLAQUETTES**
ELEKTROMECHANISCHE SCHEIBENBREMSE MIT FESTEM BREMSSATTEL MIT EINEM GETRIEBE ZUR KOMPENSIERUNG VON ASYMMETRISCHEM VERSCHLEISS DER BELÄGE DAVON
ELECTROMECHANICAL DISK BRAKE WITH FIXED CALIPER COMPRISING A TRANSMISSION COMPENSATING ASYMMETRIC WEAR OF THE PADS THEREOF

(30) Priorité: 21.12.2015 FR 1562940
(43) Date de publication de la demande: 31.10.2018
(73) Titulaire: Foundation Brakes France, 93700 Drancy (FR)
(72) Inventeur: ESNÉE, Didier, 72000 Le Mans (FR); PASQUET, Thierry, 94700 Vincennes (FR); CHAMPION, Pascal, 49240 Avrille (FR)
(74) Mandataire: Brevalex
(86) Numéro de dépôt international: PCT/EP2016/081661
(87) Numéro de publication internationale: WO 2017/108658

(56) Documents cités:
- FR-A1- 2 837 548
- US-A1- 2015 354 645

## Description

### DOMAINE TECHNIQUE

L'invention se rapporte à un frein à disque de véhicule automobile à étrier fixe, de type électromécanique, c'est-à-dire équipé d'un moteur électrique entraînant des actionneurs mécaniques.

### ÉTAT DE LA TECHNIQUE ANTÉRIEURE

Plus particulièrement, l'invention se rapporte à un frein à disque comportant un disque de freinage chevauché par un étrier fixe portant une paire de plaquettes de friction en regard chacune d'une face du disque, au moins deux actionneurs mécaniques portés par l'étrier et incluant chacun un piston mobile et un organe d'entraînement lié au piston par une liaison hélicoïdale pour déplacer chacun une plaquette afin de la presser contre le disque, ainsi qu'un moteur électrique et un mécanisme de transmission aux organes d'entraînement pour mettre en mouvement les organes d'entraînement des deux actionneurs mécaniques.

Dans un frein à disque à étrier fixe de type hydraulique, les actionneurs hydrauliques situés de part et d'autre du disque pressent chacun une plaquette contre le disque lorsque le circuit hydraulique est mis sous pression, afin de générer un effort de freinage.

Au cours du temps, les plaquettes qui sont en vis-à-vis l'une de l'autre et de part et d'autre du disque s'usent de manière différente, de sorte que leurs épaisseurs deviennent différentes.

Dans le cas d'un étrier hydraulique, la différence d'épaisseur des plaquettes est compensée par le fait que les deux actionneurs sont reliés à un même circuit hydraulique. Avec un tel circuit le fonctionnement correspond à celui d'un asservissement en efforts, qui permet par là même que les pistons des actionneurs aient des courses de longueurs différentes et/ou des positions de base différentes par rapport à l'étrier.

Concrètement, lors du freinage, la mise sous pression du circuit hydraulique, et par là même des actionneurs hydrauliques, déplace les pistons de ces actionneurs vers le disque selon des courses pouvant être différentes ou à partir de positions de base différentes. Ce déplacement s'opère jusqu'à ce que les pistons plaquent les plaquettes contre le disque, la pression restant identique dans le circuit et dans les actionneurs en toutes circonstances.

Il s'ensuit qu'avec un étrier hydraulique, le rattrapage d'une usure asymétrique des plaquettes se fait de manière naturelle : quels que soient les épaisseurs des plaquettes, elles sont nécessairement plaquées toutes les deux contre le disque de freinage dès lors que le circuit hydraulique est mis sous pression.

Avec un étrier de type électromécanique, c'est un même moteur qui entraîne les deux actionneurs électromécaniques, par l'intermédiaire d'un mécanisme de transmission, pour qu'ils rapprochent les pistons du disque afin de presser les plaquettes sur le disque pour obtenir l'effet de freinage.

Si le mécanisme assure une transmission de type directe, les déplacements et les positions de base des deux pistons sont nécessairement les mêmes lorsque le moteur entraine les actionneurs. Un écart d'épaisseur des plaquettes résultant d'une usure asymétrique ne peut alors pas être rattrapé, car les pistons entraînés par le moteur se déplacent nécessairement de la même course lorsque le moteur est
Le document FR2837548 A1 décrit un étrier de frein du type électromécanique avec un même moteur qui entraîne les deux plaquettes sur le disque pour obtenir l'effet de freinage.

Le but de l'invention est de proposer une architecture de transmission mécanique assurant un rattrapage d'une usure asymétrique dans un frein ayant un étrier comprenant deux actionneurs mécaniques entraînés par un même moteur électrique.

### EXPOSÉ DE L'INVENTION

A cet effet, l'invention se rapporte à un étrier de frein de véhicule automobile destiné à chevaucher un bord externe d'un disque de freinage, cet étrier comprenant une première plaquette et une seconde plaquette destinées à être de part et d'autre du disque pour être pressées contre ce disque, ainsi que ;
- un premier actionneur mécanique incluant un premier piston mobile et une première roue dentée primaire, le premier piston étant en appui sur la première plaquette pour la presser contre le disque par mise en rotation de la première roue dentée primaire ;
- un second actionneur mécanique incluant un second piston mobile et une seconde roue dentée primaire, le second piston étant en appui sur la seconde plaquette pour la presser contre le disque par mise en rotation de la seconde roue dentée primaire ;
- un arbre rotatif comportant une première vis sans fin et une seconde vis sans fin ayant un sens d'enroulement opposé à celui de la première vis sans fin, l'arbre d'entraînement étant mobile en translation selon sa propre direction longitudinale ;
- un moteur électrique d'entraînement de l'arbre rotatif ;
et dans lequel la première vis-sans-fin est engrenée dans la première roue dentée primaire, et la seconde vis sans fin est engrenée dans la seconde roue dentée primaire.

Avec cet agencement, lorsque l'une des plaquettes arrive au contact du disque, la roue primaire de l'actionneur correspondant s'immobilise, mais l'arbre rotatif continue de tourner en se translatant pour déplacer l'actionneur de l'autre plaquette jusqu'à ce qu'elle arrive au contact du disque. Le mécanisme rattrape ainsi toute usure asymétrique des plaquettes en assurant que les deux plaquettes d'épaisseurs différentes viennent toutes deux en appui sur le disque lorsque l'arbre rotatif est mis en mouvement.

L'invention se rapporte également à un étrier ainsi défini, dans lequel la première et la seconde roue dentée primaire tournent autour d'axes parallèles l'un à l'autre et perpendiculaires à la direction longitudinale de l'arbre rotatif.

L'invention se rapporte également à un étrier ainsi défini, dans lequel chaque actionneur comporte une roue dentée entraîneuse liée au piston correspondant par une liaison hélicoïdale, et un train d'engrenage par l'intermédiaire duquel la roue dentée entraîneuse est liée en mouvement à l'une des vis sans fin de l'arbre rotatif.

L'invention se rapporte également à un étrier ainsi défini, dans lequel le train d'engrenage de chaque actionneur comporte la roue dentée primaire de cet actionneur ainsi qu'une roue dentée secondaire engrenée dans la roue dentée primaire et dans une denture circonférentielle oblique de la roue dentée entraîneuse.

L'invention concerne également un frein de véhicule automobile, comprenant un étrier ainsi défini, ainsi qu'un disque de freinage.

### BRÈVE DESCRIPTION DES DESSINS

- la figure 1 est une vue en coupe transversale d'un frein selon l'invention montrant une portion de disque et l'étrier lorsque la plaquette externe est plus fortement usée que la plaquette interne ;
- la figure 2 est une vue de face du mécanisme selon l'invention montrant sa transmission et ses actionneurs lorsque le frein est complètement desserré ;
- la figure 3 est une vue arrière du mécanisme selon l'invention montrant sa transmission et ses actionneurs lorsque le frein est serré.

### EXPOSÉ DÉTAILLÉ DE MODES DE RÉALISATION PARTICULIERS

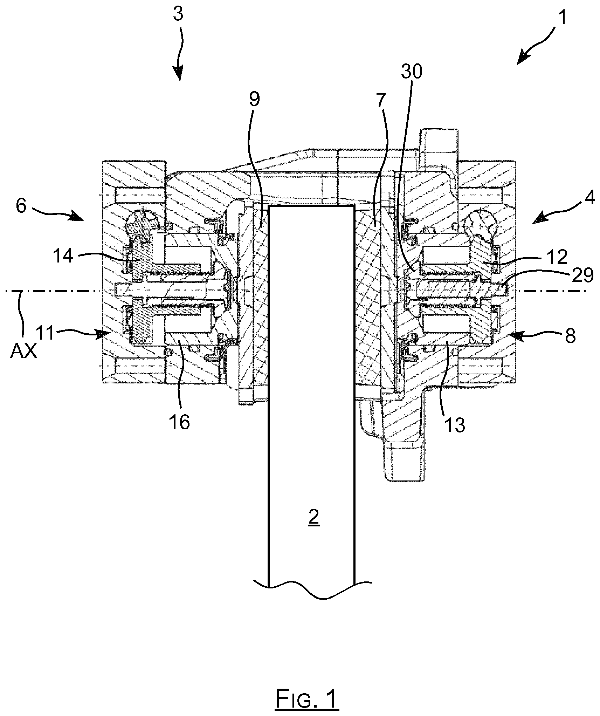

Le frein selon l'invention qui est repéré par 1 dans la figure 1 comporte un disque 2 chevauché par un étrier 3 qui comporte un première portion latérale 4 par laquelle il est porté par un élément de châssis non représenté, et une seconde portion latérale 6, située en vis-à-vis de la première portion 4. L'étrier chevauche le disque 2 de telle manière que ce disque est interposé entre ses portions latérales 4 et 6.

La première portion 4 porte une première plaquette de friction 7 ainsi qu'un premier actionneur mécanique 8 pour presser cette plaquette contre une face du disque 2. De manière analogue, la seconde portion 6 porte une seconde plaquette de friction 9, et un second actionneur 11 mécanique pour presser cette seconde plaquette contre le disque, lorsque le frein est commandé.

Le premier actionneur 8 comporte un organe d'entraînement sous forme d'une roue dentée 12 comprenant un moyeu formant un écrou dans lequel est disposée une vis 29 dont l'extrémité dirigée vers le disque 2 porte une tête 30, par exemple conique, en appui sur le fond du piston 13. Le piston 13 est mobile en translation selon l'axe AX, dans une chambre ou chemise de la première portion 4 de l'étrier, en étant bloqué en rotation autour de cet axe AX, par exemple par un plot radial.

Lorsque la roue 12 est entraînée en rotation autour de l'axe AX, elle provoque ainsi le déplacement du piston 13 le long de cet axe, dans un sens ou dans l'autre le long de l'axe AX, selon le sens de rotation de cette roue 12 autour de l'axe AX.

De la même manière, le second actionneur 6 comporte une roue dentée d'entraînement 14 et un piston 16 le long de l'axe AX, pour déplacer le piston le long 16 de l'axe AX lorsque la roue 14 est mise en rotation.

Lorsque le frein est neuf, les deux plaquettes 7 et 9 ont la même épaisseur, mais ces épaisseurs deviennent différentes, compte tenu de l'usure de ces plaquettes au fil du temps, qui peut être asymétrique. Ainsi, dans l'exemple de la figure 1, la seconde plaquette, à savoir la plaquette 9 présente une épaisseur très inférieure à la première plaquette, à savoir la plaquette 7.

D'une manière générale l'asymétrie de l'usure n'est pas prévisible, de sorte qu'il est aussi possible que ce soit au contraire la seconde plaquette 9 qui présente une épaisseur plus importante que la première plaquette 7.

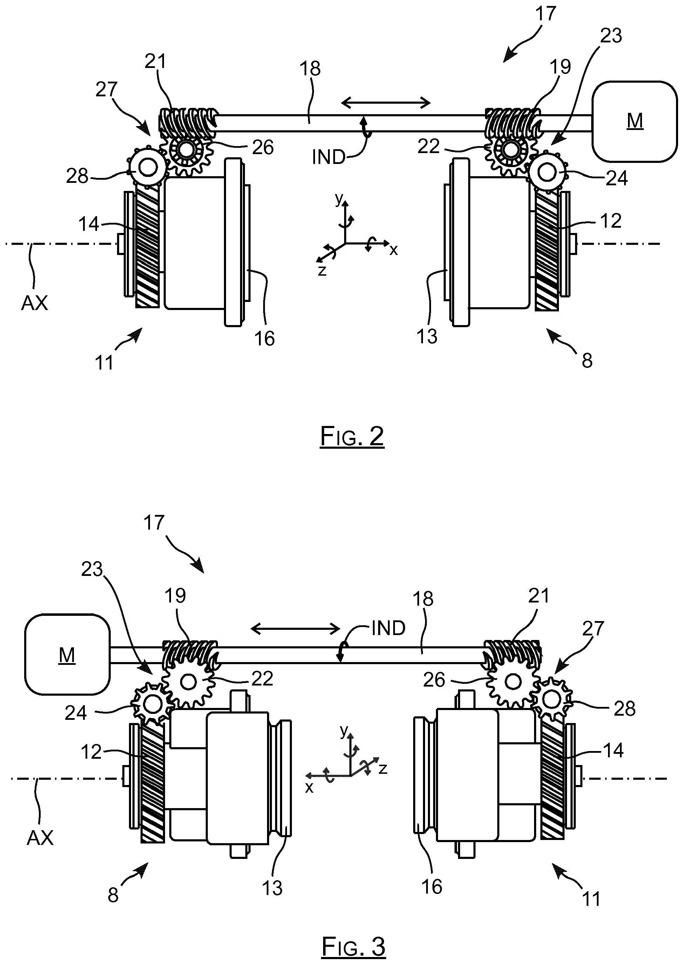

Les actionneurs mécaniques 8 et 11 ont leurs roues d'entraînement 12, 14 qui sont entraînées en rotation l'une et l'autre par un même moteur repéré par M, par l'intermédiaire d'un ensemble de transmission repéré par 17 sur les figures 2 et 3.

L'ensemble de transmission 17 comporte d'une part un arbre ou axe moteur 18, d'orientation parallèle à l'axe AX, et qui est accouplé au moteur M avantageusement par un réducteur non représenté pour être mis en rotation par celui-ci, tout en conservant un degré de liberté en translation le long de l'axe AX par rapport au moteur et au bâti de l'étrier de frein.

Cet arbre 18 porte une première vis sans fin 19 située au niveau du premier actionneur 8 pour entraîner en rotation la première roue entraîneuse 12, et une deuxième vis sans fin 21 située au niveau du second actionneur 11 pour entraîner en rotation la seconde roue 14, ces deux vis sans fin 19, 21 étant rigidement solidaires de l'arbre 18 qui les porte.

La première vis sans fin 19 est engagée dans une roue dentée primaire 22 d'un premier train d'engrenage 23 du premier actionneur 8, cette roue primaire 22 étant elle-même engrenée avec une roue dentée secondaire 24 de ce premier train d'engrenage 23. Cette roue secondaire 24 est par ailleurs engrenée avec une denture oblique de la périphérie de la première roue dentée 12 du premier actionneur 8.

En pratique, lorsque l'arbre 18 tourne en étant entraîné par le moteur M, sa première vis sans fin 19 entraîne en rotation la roue dentée 12 par l'intermédiaire du premier train d'engrenage 23 qui constitue un réducteur.

De manière analogue, la seconde vis sans fin 21 est engagée dans une autre roue dentée primaire 26 d'un second train d'engrenage 27 du second actionneur 11, qui est elle-même engrenée avec une autre roue dentée secondaire 28 engagée dans une denture oblique périphérique de la seconde roue dentée 14.

Ainsi, lorsque l'arbre 18 tourne, sa seconde vis sans fin 21 entraîne la seconde roue d'entraînement 14 via le second train d'engrenage 27 qui constitue un autre réducteur.

Comme visible sur les figures 2 et 3, les axes de rotation de l'arbre 18 et des roues entraîneuses 12 et 14 sont parallèles à l'axe AX, alors qu'au contraire les axes de rotation de toutes les roues dentées du premier et du second train d'engrenages sont parallèles entre eux et perpendiculaires à l'axe AX.

Par ailleurs, les filetages de la première et de la deuxième vis sans fin sont en sens inverses : la première vis sans fin 19 est filetée à l'envers, alors que la seconde vis 21 est filetée à l'endroit, afin qu'une rotation de l'arbre 18 dans un premier sens de rotation provoque alors qu'une rotation dans un second sens de rotation provoque soit leur écartement.

Lorsque l'arbre 18 est entraîné en rotation dans le sens indirect repéré par IND sur les figures 2 et 3, la première vis sans fin 19 entraîne la roue primaire 22 en sens direct qui elle-même entraîne la roue secondaire 24 en sens indirect. La roue secondaire 24 entraîne alors la seconde roue entraîneuse 12 en sens direct, ce qui provoque une sortie du piston 13.

Comme la seconde vis sans fin 21 a un filetage en sens inverse de celui de la première vis 19, cette même rotation de l'arbre 18 en sens indirect provoque de manière analogue une rotation de la seconde roue entraîneuse 14 mais en sens indirect, ce qui provoque aussi la sortie du second piston, du fait notamment que ces pistons se font face.

Lorsque le frein est commandé pour presser les plaquettes sur le disque, la plaquette portée par l'un ou l'autre de ces pistons arrive en appui sur le disque de freinage avant l'autre, ce qui immobilise le piston qui la porte, ainsi que la roue primaire du train d'engrenage de ce piston.

L'arbre 18 continue de tourner, mais la vis sans fin entraînant le piston portant la plaquette qui est déjà en appui sur le disque est engrenée dans la roue primaire correspondante qui est bloquée en position. Cette roue primaire étant bloquée, la rotation de l'arbre 18 provoque la translation simultanée de cet arbre selon la direction de sa longueur. Dans ces conditions, le piston portant la plaquette qui n'est pas encore en contact avec le disque continue de sortir sous l'effet de la rotation de l'arbre 18 et de la vis sans fin associée à ce piston.

Une fois que l'autre plaquette arrive en appui sur le disque, le piston qui la porte s'immobilise, et de même, la roue primaire correspondant au train d'engrenage entraînant ce piston se bloque, de sorte que l'arbre 18 s'immobilise lui aussi du fait qu'il est bloqué en rotation par les deux roues primaires 22 et 26.

Comme on le comprend, le frein selon l'invention permet de façon naturelle de rattraper une usure asymétrique des deux plaquettes puisqu'il assure que lorsqu'une première plaquette arrive en appui sur le disque, l'autre plaquette continue d'être déplacée jusqu'à ce qu'elle arrive à son tour en appui sur le disque avec la force désirée. Dans la description ci-dessus, le fonctionnement du frein selon l'invention a été expliqué en termes de déplacement de ses composant afin d'en faciliter la compréhension, attendu qu'en pratique, les déplacements ont des amplitudes fiables et que ce sont principalement des efforts qui sont transmis par les différents composants.

Dans la description ci-dessus, l'arbre rotatif entraîne deux actionneurs simples situés de part et d'autre du disque, mais un système analogue dans lequel l'arbre rotatif entraîne deux actionneurs multiples situés de part et d'autre du disque, et comportant chacun plusieurs pistons mobiles déplacés par autant de roues entraîneuses ne sort pas du cadre de la présente invention.

Par ailleurs, dans l'exemple des figures, chaque vis sans fin entraîne la roue entraîneuse de l'actionneur correspondant par l'intermédiaire d'une roue primaire et d'une roue secondaire tournant autour d'axes perpendiculaires à l'axe de l'arbre. Il est bien entendu qu'une roue primaire à denture oblique, engrenée dans la vis sans fin et dans la roue d'entraînement, cette roue primaire à denture oblique tournant alors autour d'un axe orienté à 45° par rapport à l'arbre rotatif ne sort pas du cadre de la présente invention.

### Nomenclature :

1 : frein
2 : disque
3 : étrier
4 : première portion
6 : seconde portion
7 : première plaquette
8 : premier actionneur
9 : seconde plaquette
11 : second actionneur
12 : première roue entraîneuse
13 : premier piston
14 : seconde roue entraîneuse
16 : second piston
17 : ensemble de transmission
18 : arbre ou axe moteur
19 : première vis sans fin
21 : seconde vis sans fin
22 : roue dentée primaire
23 : premier train d'engrenage
24 : roue dentée secondaire
26 : autre roue dentée primaire
27 : second train d'engrenage
28 : autre roue dentée secondaire
AX : axe
IND : sens indirect
M : moteur

## Revendications

1. Etrier (3) de frein de véhicule automobile, destiné à chevaucher un bord externe d'un disque de freinage (2), cet étrier comprenant une première plaquette (7) et une seconde plaquette (9) destinées à être de part et d'autre du disque (2) pour être pressées contre ce disque (2), ainsi que ;
- un premier actionneur mécanique (8) incluant un premier piston mobile (13) et une première roue dentée primaire (22), le premier piston (13) étant en appui sur la première plaquette (7) pour la presser contre le disque par mise en rotation de la première roue dentée primaire (22) ;
- un second actionneur mécanique (11) incluant un second piston mobile (16) et une seconde roue dentée primaire (26), le second piston (16) étant en appui sur la seconde plaquette (9) pour la presser contre le disque par mise en rotation de la seconde roue dentée primaire (26) ;
- un arbre rotatif (18) comportant une première vis sans fin (19) et une seconde vis sans fin (21) ayant un sens d'enroulement opposé à celui de la première vis sans fin (19), l'arbre d'entraînement (18) étant mobile en translation selon sa propre direction longitudinale ;
- un moteur électrique (M) d'entraînement de l'arbre rotatif (18) ;
et dans lequel la première vis-sans-fin (19) est engrenée dans la première roue dentée primaire (22), et la seconde vis sans fin (21) est engrenée dans la seconde roue dentée primaire (26).

2. Etrier selon la revendication 1, dans lequel la première et la seconde roue dentée primaire tournent autour d'axes parallèles l'un à l'autre et perpendiculaires à la direction longitudinale de l'arbre rotatif (18).

3. Etrier selon la revendication 1 ou 2, dans lequel chaque actionneur (8, 11) comporte une roue dentée entraîneuse (12, 14) liée au piston correspondant (13, 16) par une liaison hélicoïdale, et un train d'engrenage (23, 27) par l'intermédiaire duquel la roue dentée entraîneuse (12, 14) est liée en mouvement à l'une des vis sans fin de l'arbre rotatif (18).

4. Etrier selon la revendication 3, dans lequel le train d'engrenage (23, 27) de chaque actionneur (8, 11) comporte la roue dentée primaire (22, 26) de cet actionneur (8, 11) ainsi qu'une roue dentée secondaire (24, 28) engrenée dans la roue dentée primaire (22, 26) et dans une denture circonférentielle oblique de la roue dentée entraîneuse (12, 14).

5. Frein de véhicule automobile, comprenant un étrier selon l'une des revendications précédentes, ainsi qu'un disque de freinage (2).

## Patentansprüche

1. Kraftfahrzeug-Bremssattel (3) zum Überlappen einer Außenkante einer Bremsscheibe (2), wobei der Bremssattel einen ersten Belag (7) und einen zweiten Belag (9) umfasst, die dazu bestimmt sind, auf beiden Seiten der Bremsscheibe (2) zu liegen, um gegen die Bremsscheibe (2) gedrückt zu werden, sowie;
- ein erstes mechanisches Stellglied (8), das einen ersten beweglichen Kolben (13) und ein erstes primäres Zahnrad (22) beinhaltet, wobei der erste Kolben (13) auf dem ersten Belag (7) abgestützt ist, um ihn durch Drehen des ersten primären Zahnrades (22) gegen die Bremsscheibe zu drücken;
- ein zweites mechanisches Stellglied (11), das einen zweiten beweglichen Kolben (16) und ein zweites primäres Zahnrad (26) beinhaltet, wobei der zweite Kolben (16) auf dem zweiten Belag (9) abgestützt ist, um ihn durch Drehen des zweiten primären Zahnrades (26) gegen die Bremsscheibe zu drücken;
- eine rotierende Welle (18), die eine erste Schnecke (19) und eine zweite Schnecke (21) mit einer der der ersten Schnecke (19) entgegengesetzten Wicklungsrichtung umfasst, wobei die Antriebswelle (18) in ihrer eigenen Längsrichtung verschiebbar gelagert ist;
- einen Elektromotor (M) zum Antreiben der rotierenden Welle (18);
und bei dem die erste Schnecke (19) in das erste primäre Zahnrad (22) und die zweite Schnecke (21) in das zweite primäre Zahnrad (26) eingreift.

2. Bremssattel nach Anspruch 1, in dem sich das erste und das zweite primäre Zahnrad um Achsen parallel zueinander und senkrecht zur Längsrichtung der rotierenden Welle (18) drehen.

3. Bremssattel nach Anspruch 1 oder 2, in dem jedes Stellglied (8, 11) ein Antriebszahnrad (12, 14) umfasst, das über eine schraubenförmige Verbindung mit dem entsprechenden Kolben (13, 16) verbunden ist, sowie ein Zahnradgetriebe (23, 27), durch das das Antriebszahnrad (12, 14) in Bewegung mit einer der Schnecken der rotierenden Welle (18) verbunden ist.

4. Bremssattel nach Anspruch 3, wobei das Zahnradgetriebe (23, 27) jedes Stellglieds (8, 11) das primäre Zahnrad (22, 26) dieses Stellglieds (8, 11) sowie ein sekundäres Zahnrad (24, 28) umfasst, das in das primäre Zahnrad (22, 26) und in ein schräges Umfangszahnrad des Antriebszahnrades (12, 14) eingreift.

5. Kraftfahrzeugbremse, umfassend einen Bremssattel nach einem der vorstehenden Ansprüche sowie eine Bremsscheibe (2).

## Claims

1. A brake caliper (3) of an automobile vehicle, for overlapping an outer edge of a braking disc (2), this caliper comprising a first pad (7) and a second pad (9) for being on either side of the disc (2) to be pressed against this disc (2), as well as:
- a first mechanical actuator (8) including a first movable piston (13) and a first primary toothed wheel (22), the first piston (13) resting on the first pad (7) to press it against the disc by rotating the first primary toothed wheel (22);
- a second mechanical actuator(11) including a second movable piston (16) and a second primary toothed wheel (26), the second piston (16) resting on the second pad (9) to press it against the disc by rotating the second primary toothed wheel (26);
- a rotary shaft (18) including a first worm gear (19) and a second worm gear (21) having a winding direction opposite to that of the first worm gear (19), the driving shaft (18) being translationally movable along its own longitudinal direction;
- an electric motor (M) for driving the rotary shaft (18);
and wherein the first worm gear (19) is meshed in the first primary toothed wheel (22), and the second worm gear (21) is meshed in the second primary toothed wheel (26).

2. The caliper according to claim 1, wherein the first and the second primary toothed wheel rotate about axes parallel to each other and perpendicular to the longitudinal direction of the rotary shaft (18).

3. The caliper according to claim 1 or 2, wherein each actuator (8, 11) includes a driving toothed wheel (12, 14) connected to the corresponding piston (13, 16) by a helical connection, and a gear train (23, 27) through which the driving toothed wheel (12, 14) is movably connected to one of the worm gears of the rotary shaft (18).

4. The caliper according to claim 3, wherein the gear train (23, 27) of each actuator (8, 11) includes the primary toothed wheel (22, 26) of this actuator (8, 11) as well as a secondary toothed wheel (24, 28) meshed in the primary toothed wheel (22, 26) and in oblique circumferential teeth of the driving toothed wheel (12, 14).

5. A brake for an automobile vehicle, comprising a caliper according to one of the preceding claims, as well as a braking disc (2).
